(19) Europäisches Patentamt / European Patent Office / Office européen des brevets

(11) **EP 3 112 981 B1**

(12) **EUROPEAN PATENT SPECIFICATION**

(45) Date of publication and mention
of the grant of the patent:
**01.04.2020 Bulletin 2020/14**

(51) Int Cl.:
***G06F 1/32*** *(2019.01)*

(21) Application number: **16176727.2**

(22) Date of filing: **28.06.2016**

(54) **POWER SUPPLY CONTROL MECHANISM, ELECTRONIC DEVICE INCLUDING THE SAME, HEARING AID, AND POWER SUPPLY CONTROL METHOD**

STROMVERSORGUNGSSTEUERUNGSMECHANISMUS, ELEKTRONISCHE VORRICHTUNG DAMIT, HÖRGERÄT UND STROMVERSORGUNGSSTEUERUNGSVERFAHREN

MÉCANISME DE COMMANDE D'ALIMENTATION, DISPOSITIF ÉLECTRONIQUE COMPRENANT CELUI-CI, PROTHÈSE AUDITIVE, ET PROCÉDÉ DE COMMANDE D'ALIMENTATION ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2015 JP 2015131613**

(43) Date of publication of application:
**04.01.2017 Bulletin 2017/01**

(73) Proprietor: **Maxell Holdings, Ltd.**
**Kyoto 618-8525 (JP)**

(72) Inventor: **TANII, Keiichi**
**Kyoto 618-8525 (JP)**

(74) Representative: **Diehl & Partner GbR**
**Patentanwälte**
**Erika-Mann-Strasse 9**
**80636 München (DE)**

(56) References cited:
**EP-A1- 2 876 777     GB-A- 2 306 237**
**US-A- 5 590 343**

**Description**

BACKGROUND OF THE INVENTION

1. Field of the Invention

The present disclosure relates to a power supply control mechanism that switches an operation mode of a device by controlling a power supply from a power source to a driving circuit, a battery-driven electronic device including the same, a hearing aid as the electronic device, and a power supply control method. Specifically, the present disclosure relates to a power supply control mechanism that switches an operation mode of a device between a sleep mode for limiting the operation of the device to a minimum range, and a normal operation mode for operating the device with a normal power supply, an electronic device and a hearing aid including the same, and a power supply control method.

2. Description of Related Art

Portable electronic devices are generally driven by a battery attached to the electronic devices as a driving power source.

Among such battery-driven electronic devices, those including a power supply control mechanism perform a power supply control to shift an operation mode of the device from a normal operation mode to a sleep mode for limiting a power supply from a battery to a driving circuit in an inactive state of the electronic device. Such a power supply control prevents unnecessary consumption of a battery power, thereby extending a time before replacing or re-charging of the battery.

Methods for controlling a shifting timing of the electronic device from the normal operation mode to the sleep mode include: shifting by detecting the user's operation of a switch button etc. formed on the electronic device; shifting by detecting a mode shifting control signal from an external device which is used in association with the electronic device through, e.g., sharing data with the electronic device; and further providing the electronic device with a sensor function and shifting by detecting an inactive state or an assumed inactive state of the electronic device using the sensor. These various manual or automatic methods have been used.

A hearing aid is one of the portable battery-driven electronic devices, and a hearing aid further reduced in size and weight as a device has been achieved owning to the digitization of sound signal processing, and high performance and reduction in size of electric circuit components. However, in terms of appearance and fit-feeling, a need for reduction in size and weight of a hearing aid has been strongly demanded by the user. In response to such demand, a hearing aid capable of shifting the operation mode to the sleep mode during inactive state without providing a power switch that may cause increase in size of the device has been proposed (Prior Art Document: JP 2013- 533659 A).

The conventional hearing aid described in the above Prior Art Document uses a RF transmitter as an external device used in a pair with a hearing aid body. The RF transmitter sends a power-off signal reachable only within a certain distance range. When the hearing aid receives the power-off signal from the RF transmitter, a power supply control circuit within the hearing aid determines that the hearing aid is being removed from the user's ear and not being used, and performs a power supply control to shift the operation mode to the sleep mode.

The conventional hearing aid described in the above Prior Art Document is advantageous in the pursuit of reduction in size and weight of the hearing aid in that it does not need switches for switching the operation mode from the normal operation mode to the sleep mode.

However, since the above conventional hearing aid is configured to shift to the sleep mode only when the hearing aid and the RF transmitter as an external device are within the certain distance range, it is impossible to change the hearing aid into the sleep mode state even when the user desires to do so if the hearing aid is distant from the external device. A problem that the user cannot shift the operation mode to the sleep mode at user's desired optional timing is caused by the elimination of a switch in the device body that is directly operable by the user. This elimination of the switch results from the purpose of the pursuit of reduction in size and weight of electronic devices. This problem is not limited to the hearing aid, but is common to other portable electronic devices.

On the other hand, it is inevitable that providing a switch for shifting the operation mode to the sleep mode at optional timing leads to increase in size of a device. Furthermore, the use of an IC chip in a control circuit, which controls a shifting operation to the sleep mode, has been progressed in the course of downsizing process, and thus, when switching the operation mode manually, the device should be configured to be able to apply a predetermined signal designated for switching the operation mode within the IC chip according to the switch operation performed by the user.

In order to reduce power consumption of processor based devices GB 2 306 237 A discloses a circuit interrupting the main system power supply during periods of inactivity.

## SUMMARY OF THE INVENTION

Therefore, with the foregoing in mind, it is an object of the present disclosure to solve the above-described problems, and to provide a power supply control mechanism that can switch the operation mode of the device between the normal operation mode and the sleep mode at user's desired optional timing while achieving reduction in size and weight of the electronic device. The present disclosure also aims to provide an electronic device and a hearing aid including the power supply control mechanism, and a power supply control method that can achieve the above-described purpose.

In order to solve the above-mentioned conventional problem, a power supply control mechanism disclosed in the present application includes a power supply control unit that includes a detection terminal and controls a power supply from a power source to a driving circuit, a push switch that can be operated by a user, and a signal generation unit that operates with a power supplied from the power source. The push switch can change a voltage to be applied to the detection terminal according to an operation performed by the user. The signal generation unit outputs a detection signal to be applied to the detection terminal, and stops the output of the detection signal when the voltage of the detection terminal satisfies a predetermined condition. The power supply control unit controls the power supply by detecting that the push switch is operated and the detection signal is stopped on the basis of a change in the voltage applied to the detection terminal, thereby switching an operation mode of a device between at least two modes of a normal operation mode and a sleep mode.

In addition, a power supply control method disclosed in the present application includes a power supply control unit that controls a power supply from a power source to a driving circuit according to a voltage applied to a detection terminal, a push switch that can be operated by a user, and a signal generation unit that operates with a power supplied from the power source. The signal generation unit outputs a detection signal to be input to the detection terminal of the power supply control unit, and stops the output of the detection signal when the voltage of the detection terminal satisfies a predetermined condition. The power supply control unit switches an operation mode of a device from a sleep mode to a normal operation mode upon detecting a change in a voltage applied to the detection terminal resulting from the operation of the push switch, and switches the operation mode of the device from the normal operation mode to the sleep mode upon detecting that the detection signal is not applied to the detection terminal.

Moreover, an electronic device disclosed in the present application includes a battery as a power source, a driving circuit that operates with a power supplied from the battery, and a power supply control mechanism disclosed in the present application.

Furthermore, a hearing aid disclosed in the present application includes a battery as a power source, a driving circuit that operates with a power supplied from the battery, and the power supply control mechanism disclosed in the present application. As the driving circuit, the hearing aid at least includes a microphone that detects an external sound, a control unit that converts a sound signal from the microphone into a conversion signal under a predetermined condition, and a speaker that is wearable on a user's ear and outputs the conversion signal converted in the control unit.

In the power supply control mechanism disclosed in the present application, the power supply control unit that includes a detection terminal switches the operation mode of the device by detecting that the push switch that can be reduced in size is operated and the detection signal from the signal generation unit is stopped. Consequently, it is possible to switch the operation mode of the device between the normal operation mode and the sleep mode at user's desired optional timing while achieving reduction in size and weight of the electronic device.

The invention is defined by the appended independent claims. Further aspects of the invention are defined by the dependent claims. Embodiments not covered by the claims are not part of the invention.

## BRIEF DESCRIPTION OF THE DRAWINGS

FIG. 1 is a block diagram showing a first configuration of a power supply control mechanism
FIG. 2 is a transition diagram illustrating a switching operation from a sleep mode to a normal operation mode in the power supply control mechanism of the first configuration.
FIG. 3 is a transition diagram illustrating a switching operation from the normal operation mode to the sleep mode in the power supply control mechanism of the first configuration.
FIG. 4 is a block diagram showing a second configuration of the power supply control mechanism.
FIG. 5 is a transition diagram illustrating a switching operation from the normal operation mode to the sleep mode in the power supply control mechanism of the second configuration.
FIG. 6 is a flowchart illustrating a control process in a power supply control method according to the present disclosure.
FIG. 7 is a block diagram showing a configuration of a hearing aid as an electronic device according to the present disclosure.

DETAILED DESCRIPTION OF THE INVENTION

A power supply control mechanism according to the present disclosure includes a power supply control unit that includes a detection terminal and controls a power supply from a power source to a driving circuit, a push switch that can be operated by a user, and a signal generation unit that operates with a power supplied from the power source. The push switch can change a voltage to be applied to the detection terminal according to an operation performed by the user. The signal generation unit outputs a detection signal to be applied to the detection terminal, and stops the output of the detection signal when the voltage of the detection terminal satisfies a predetermined condition. The power supply control unit controls the power supply by detecting that the push switch is operated and the detection signal is stopped on the basis of a change in the voltage applied to the detection terminal, thereby switching an operation mode of a device between at least two modes of a normal operation mode and a sleep mode.

In the power supply control mechanism according to the present disclosure, the power supply control unit allows the power supply control mechanism to switch the operation mode of the device by detecting the user's operation of the push switch that can be implemented in a compact and simple configuration, and the stop of the detection signal output from the signal generation unit resulting from the detection of the operation of the push switch on the basis of a change in the voltage of the detection terminal. Consequently, it is possible to achieve a power supply control mechanism that can switch the operation mode of the device according to the user's instruction at optional timing while achieving a configuration capable of reducing size and weight of the electronic device.

In the power supply control mechanism disclosed in the present application, it is preferable that the power supply control unit switches the operation mode of the device from the sleep mode to the normal operation mode upon detecting that the voltage of the detection terminal reaches a predetermined first voltage. In this way, it is possible to shift the operation mode of the device from the sleep mode to the normal operation mode by detecting the push switch operation performed by the user.

Furthermore, it is preferable that the power supply control unit switches the operation mode of the device from the normal operation mode to the sleep mode upon detecting that the voltage of the detection terminal reaches a predetermined second voltage. In this way, it is possible to shift the operation mode of the device from the normal operation mode to the sleep mode by detecting the push switch operation performed by the user.

In this case, when the detection signal is a pulse wave signal that alternately repeats an ON state and an OFF state for respective predetermined time, and a duration time of the OFF state of the pulse wave signal is shorter than a predetermined time set for the power supply control unit to detect the application of the second voltage, it is preferable that the signal generation unit stops the output of the pulse wave signal upon detecting that the voltage of the ON state is applied to the detection terminal for a period longer than a duration time of the ON state of the pulse wave signal output by itself. This configuration enables detection of the push switch operation performed by the user with a simple circuit structure.

Furthermore, when the detection signal is a direct current signal that maintains a predetermined voltage continuously, and a voltage higher than the voltage of the direct current signal is applied to the detection terminal upon the operation of the push switch, it is preferable that the signal generation unit stops the output of the direct current signal upon detecting that the high voltage is applied to the detection terminal. This configuration enables the power supply control unit to easily detect the push switch operation performed by the user.

A voltage control method disclosed in the present application includes the power supply control unit that controls a power supply from a power source to the driving circuit according to a voltage applied to the detection terminal, the push switch that can be operated by a user, and the signal generation unit that operates with a power supplied from the power source. The signal generation unit outputs a detection signal to be input to the detection terminal of the power supply control unit, and stops the output of the detection signal when the voltage of the detection terminal satisfies a predetermined condition. The power supply control unit switches an operation mode of a device from a sleep mode to a normal operation mode upon detecting a change in a voltage applied to the detection terminal resulting from the operation of the push switch, and switches the operation mode of the device from the normal operation mode to the sleep mode upon detecting that the detection signal is not applied to the detection terminal.

In the power supply control method disclosed in the present application, it is possible to switch the operation mode of the device corresponding to the user's operation using the push switch that can be implemented in a compact and simple configuration, and the signal generation unit that generates a detection signal to be applied to the detection terminal of the power supply control unit. Consequently, it is possible to achieve a power supply control mechanism that can switch the operation mode of the device according to the user's instruction at optional timing while achieving a configuration capable of reducing size and weight of the electronic device.

An electronic device disclosed in the present application includes a battery as a power source, the driving circuit that operates with a power supplied from the battery, and any of the power supply control mechanism according to the present application. In addition, the hearing aid disclosed in the present application includes a battery as a power source, the driving circuit that operates with a power supplied from the battery, and any of the power supply control mechanism according to the present application. As the driving circuit, the hearing aid at least includes at least a microphone that detects an external sound, a control unit that converts a sound signal from the microphone into a conversion signal having a predetermined condition, and a speaker that is wearable on a user's ear and outputs the conversion signal converted in the control unit.

By doing so, it is possible to achieve the electronic device and the hearing aid utilizing the characteristics of the power supply control mechanism according to the present application.

Next, the embodiments of the power supply control mechanism and power supply control method according to the present application, and further the electronic device and hearing aid including the power supply control mechanism according to the present application are described referring to the drawings.

(Embodiments)

[First configuration of power supply control mechanism]

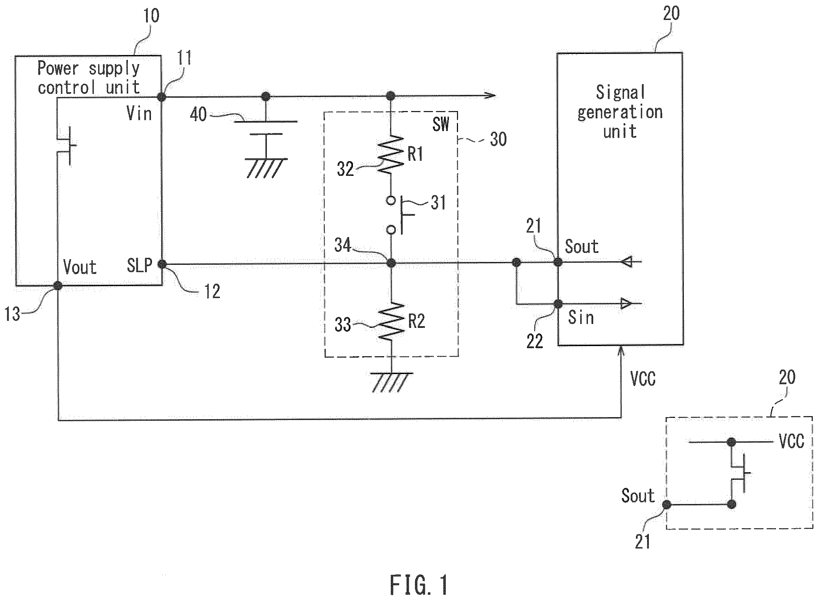

FIG. 1 is a block diagram illustrating a first configuration of a power supply control mechanism according to the present disclosure.

FIG. 1 illustrates respective components of the power supply control mechanism of the first configuration according to the present disclosure, and the interrelation between the respective components from a functional aspect, and thus, each block shown in FIG. 1 does not represent a physically independent member. Accordingly, there is a case where one block shown in FIG. 1 is independently composed as two different members, and also there is a case where a plurality of blocks shown in FIG. 1 are practically composed as one member.

As shown in FIG. 1, the power supply control mechanism of the first configuration includes a power supply control unit 10, a signal generation unit 20, and a push switch (SW) 30.

The power supply control unit 10 switches an operation mode of a device between a normal operation mode and a sleep mode by controlling a power supply from a battery 40 as a power source to a driving circuit. Here, the normal operation mode refers to an operation state in which the whole electric circuit mounted in the device operates to perform a predetermined function. Meanwhile, the sleep mode refers to an operation state in which only a minimum electric circuit operates to perform a function necessary for the device to stand by in an immediately restartable state while no power is supplied to most of the electric circuits of the device.

More specifically, the power supply control unit 10 of the power supply control mechanism according to the present embodiment includes an input terminal (Vin) 11, a sleep terminal (SLP) 12 as a detection terminal, and an output terminal (Vout) 13. The power supply control unit 10 outputs a power supply voltage as a driving voltage VCC, which is output from the battery 40 connected to the input terminal 11 from the output terminal 13, under a predetermined condition on the basis of the magnitude of a voltage applied to the sleep terminal 12.

The power supply control unit 10 controls the voltage supply of the battery 40 corresponding to the operation mode of the device. Other than that, when the battery 40 is a rechargeable battery for example, the power supply control unit 10 can control a charging voltage and a charging current supplied from a charger as an external device to the battery 40, while monitoring the capacity or the temperature of the battery 40. In addition, in a case where a driving circuit of a device is performing predetermined data processing by a CPU, or has a mechanical mechanism such as a hard disc drive, and when there is a risk that the sudden stop of driving power supply to the driving circuit may cause serious situations, such as damages on data or mechanism components, the power supply control unit 10 can generate a predetermined warning signal to cause the driving circuit to perform shutdown processing, by predicting that the stop of the operation is approaching due to a low remaining capacity of the battery voltage on the basis of a change in voltage of the battery 40 as a driving power source. In addition, the power supply control unit 10 can include a voltage stabilizing function of outputting a voltage of a predetermined potential even when the input voltage from the battery 40 is unstable.

Thus, the power supply control unit 10 of the present embodiment can perform a general control relating to the power source of the electronic device including the power supply control mechanism according to the present disclosure. The power supply control unit 10 can be implemented by using an electric circuit unit or a microcomputer incorporating a logic circuit.

A signal generation unit 20 operates with a driving voltage (VCC) supplied from the battery 40 under the power supply control of the power supply control unit 10. The driving voltage VCC of the signal generation unit 20 may be, e.g., 1.4 V. The driving voltage VCC of the signal generation unit 20 may be the same as or different from the driving voltage of other electronic circuit mounted in a device including a driving circuit, which is not shown in FIG. 1.

The signal generation unit 20 generates a detection signal to be applied to the sleep terminal 12 of the power supply control unit 10, and outputs the signal from a signal output terminal (Sout) 21. The signal generation unit 20 of the power supply control mechanism of the first configuration generates and outputs a pulse wave signal as a detection signal that alternately repeats an ON state and an OFF state for respective predetermined time. The voltage of the pulse wave signal in the ON state may be, e.g., 1.4 V, the voltage of the pulse wave signal in the OFF state may be, e.g., 0 V, and the duration time of both the ON state and the OFF state may be 0.8 seconds.

As exemplified in FIG. 1, the signal output circuit that outputs the detection signal from the signal output terminal 21 can be configured as an open drain circuit.

Further, the signal generation unit 20 includes an input terminal (Sin) 22 for grasping the voltage of the sleep terminal 12 of the power supply control unit 10. On the basis of the input signal from the input terminal 22, the signal generation unit 20 stops the output of the detection signal from the output terminal 21 when the voltage applied to the sleep terminal 12 of the power supply control unit 10 satisfies a predetermined condition.

Since the signal generation unit 20 has a function of signal generation, a function of monitoring a sleep terminal voltage, and a function of controlling its own operation, it can be implemented by using an electric circuit unit or a microcomputer incorporating a logic circuit. The signal generation unit 20 is a circuit block having such controlling functions, and when mounted on actual electronic devices, it is possible to configure the signal generation unit 20 as a part of a control unit that controls the operation of the whole device in the driving circuit of the electronic device. In this case, the signal generation unit 20 can be implemented by incorporating its functions into a microcomputer or a CPU that controls the device. Further, when the electronic device is a hearing aid, the signal generation unit 20 can be implemented in the hearing aid as part of a DSP that converts a sound signal detected by the microphone to a predetermined conversion signal.

The push switch (SW) 30, which is formed on the device, can be operated for controlling the operation of the device at use's desired optional timing.

The push switch in the present disclosure is a switch that detects a predetermined operation performed by the user, and generates an electronic signal only for a fixed time (for example 1 second) according to the operation. Examples of the push switch include: a mechanical push switch that causes electrodes arranged below a switch button to come into contact with each other, thereby allowing an electric current to flow only during a period when the user presses a protrusion such as the switch button; and a touch switch that electrically senses that the electrodes arranged on the surface of the device is touched by the user on the basis of a change in an electrical capacitance, thereby allowing a predetermined electric current to flow only for a period when the user touches the electrodes.

On the other hand, for example, the following are not considered as the push switch of the present disclosure: a slide switch or a changeover switch, regardless of whether it is mechanical or electrical, that changes the arrangement of electrodes according to the user's operation, and maintains a conductive state after it is switched on until the next switch off operation is performed by the user; and even though mechanical switches can be operated by the switch button pressing operation by the user, a mechanical switch having a lock mechanism configured to maintain a conductive state until the next pressing operation of the switch button for releasing the locked state is performed by the user.

To summarize the above concept, the push switch in the present disclosure can form a switch mechanism simply and compactly in comparison to other switches such as a slide switch. Therefore, the push switch in the present disclosure is suitable as a switch to be mounted on electric devices such as a hearing aid that have strongly been requested to achieve reduction in size and weight.

In the present embodiment, the push switch 30 includes a switch button 31 operated by the user, and a first voltage dividing resistance (R1) 32 and a second voltage dividing resistance (R2) 33 that are arranged so as to apply a predetermined voltage to a terminal 34 when the switch button 31 is operated. In the present embodiment, the terminal voltage of the terminal 34 of the push switch 30 is a predetermined first voltage determined as a "High" level voltage in the sleep terminal 12 of the power supply control unit 10, and may be, e.g., 1.4 V.

The battery 40 is a driving power source mounted in a device in which the power supply control mechanism according to the present disclosure controls the operation mode. Both a reusable rechargeable battery (secondary battery) and a dry battery (primary battery) can be used as the battery 40.

Next, the switching control of the operation mode of the device in the power supply control mechanism of the first configuration according to the present embodiment shown in FIG. 1 is described.

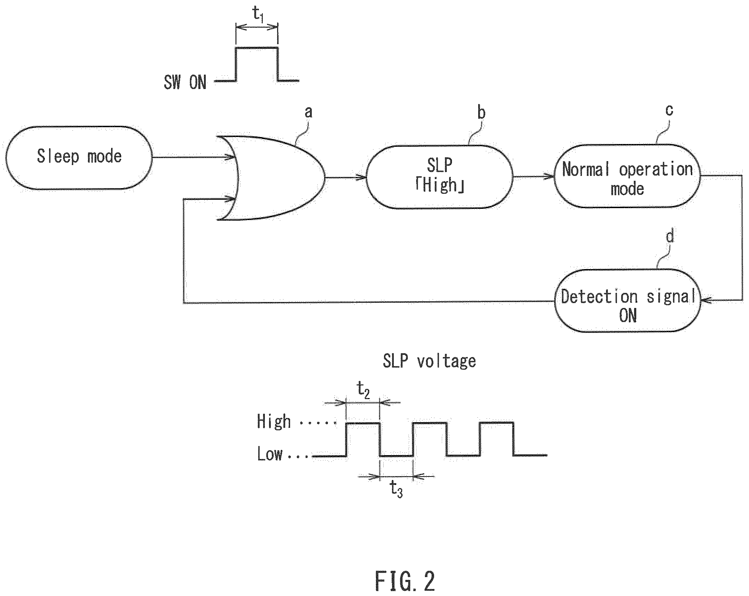

FIG. 2 is a transition diagram illustrating a state of each part of the power supply control mechanism of the first configuration in switching an operation mode of a device from a sleep mode to a normal operation mode.

In the sleep mode, the push switch 30 is operated by the user (a).

As described above, in the present embodiment, when the push switch 30 is turned ON, a "High" level voltage of 1.4 V is applied to the sleep terminal 12 of the power supply control unit 10. In order to avoid a malfunction by noise or the like, the sleep terminal 12 of the power supply control unit 10 recognizes the application of a "High" level voltage upon detecting that an ON voltage is applied for a predetermined time t1 (for example 1 second) (b).

The power supply control unit 10 determines that the push switch 30 is operated by the user, and starts the supply of a driving voltage VCC that has been stopped during the sleep mode state, thereby switching the operation mode of the device to the normal operating mode (c).

As a result of the supply of the driving voltage VCC, the signal generation unit 20 starts the operation, and outputs a detection signal from the signal output terminal 21 by the open drain circuit shown in FIG. 1 (d).

In the power supply control mechanism of the first configuration, the detection signal generated in the signal generation unit 20 is a rectangular pulse wave signal as shown in FIG. 2. As mentioned above, the detection signal is a signal that repeats the "High" level voltage of 1.4 V for a time t2 of 0.8 seconds as an example, and the "Low" level voltage of 0 V for a time t3 of 0.8 seconds as an example.

The detection signal is directly applied to the sleep terminal 12 of the power supply control unit 10, and the sleep terminal 12 repeats the potentials of 1.4 V for an ON time of 0.8 seconds and 0 V for an OFF time of 0.8 seconds alternately. The power supply control mechanism of the first configuration is configured so that, when the power supply control unit 10 detects the "Low" level voltage (0 V) for a second or more as a voltage applied to the sleep terminal 12, it determines that the input of the sleep terminal 12 is in the "Low" state (second voltage). Consequently, when the "Low" level stops in 0.8 seconds and shifts to the "High" level while the detection signal is being applied, the power supply control unit 10 determines that the voltage applied to the sleep terminal 12 is not in the "Low" state, and thereby continues the supply of the driving voltage VCC so as to maintain the normal operation mode.

Next, the switching control of the operation mode of the device from the normal operation mode to the sleep mode is described.

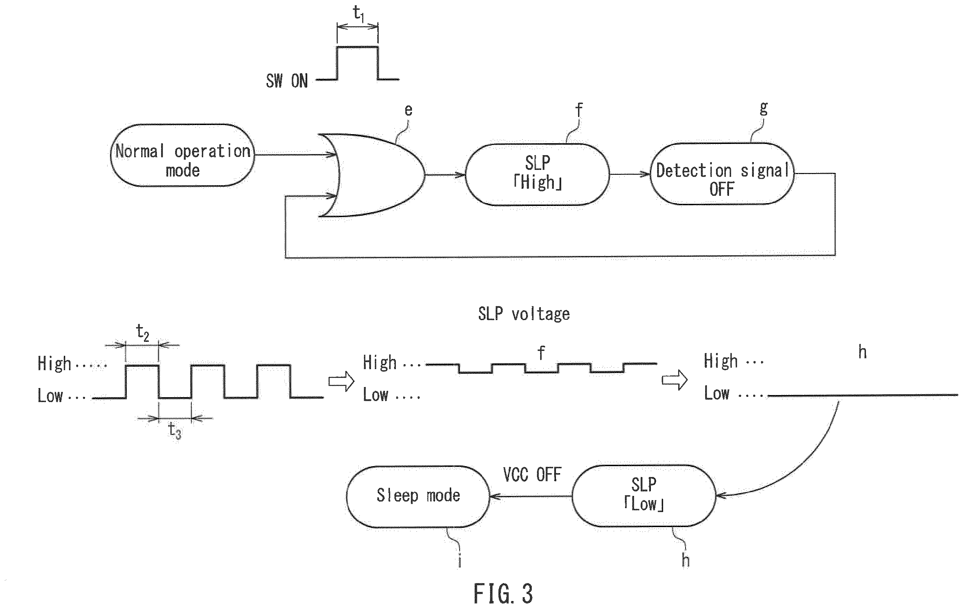

FIG. 3 is a transition diagram illustrating a state of each part of the power supply control mechanism of the first configuration in switching an operation mode of a device from a normal operation mode to a sleep mode.

As mentioned in FIG. 2, in the normal operation mode in the power supply control mechanism of the first configuration, the signal generation unit 20 outputs the pulse wave signal as a detection signal that repeats the "ON" state and the "OFF" state for 0.8 seconds each.

In the normal operation mode, the user operates the push switch 30 so as to stop the operation of the device (e).

With the operation performed by the user, the "High" level voltage of 1.4 V is applied to the sleep terminal 12 for a period exceeding a predetermined time (t1) of 1 second.

The signal generation unit 20 monitors the voltage of the sleep terminal 12. When detecting that the "High" level signal is applied to the sleep terminal 12 for a period exceeding a predetermined time of 1 second on the basis of the input of the signal into the input terminal 22, the signal generation unit 20 recognizes that the sleep terminal 12 reached the "High" level voltage. Precisely, the signal generation unit 20 recognizes that the sleep terminal 12 is in the "Low" level while the detection signal, which repeats the "High" level and the "Low" level for 0.8 seconds each output by the signal generation unit 20 itself, is input to the sleep terminal 12. When the push switch 30 is operated by the user, the "Low" level voltage applied to the sleep terminal 12 raises and a voltage close to the "High" level is applied (f), and therefore, the signal generation unit 20 recognizes that the "High" level voltage is applied to the sleep terminal 12. Therefore, the signal generation unit 20 can detect the operation of the push switch 30 performed by the user. The resistance of each resistor may be, e.g., R1 = 16 k$\Omega$, and R2 = 10 k$\Omega$.

When the signal generation unit 20 detects that the voltage of the sleep terminal 12 is at "High" level, it stops the output of the detection signal from the output terminal 21(g).

At this time, the state of the voltage applied to the sleep terminal 12 shifts from a state in which the voltage of the "High" level and the "Low" level that repeat due to the pulse wave of the detection signal are applied, to a state in which a voltage that is close to the "High" level is applied continuously, and then to a state in which the "Low" level voltage of 0 V is continuously applied, as shown in FIG. 3.

When the power supply control unit 10 detects that the voltage of the sleep terminal 12 is in the "Low" level for 1 second or more (h), it stops the supply of the driving voltage VCC to the driving circuit, thereby switching the operation mode of the device from the normal operating mode to the sleep mode (i).

The signal generation unit 20 is inactive in the sleep mode state where no driving voltage VCC is supplied from the power supply control unit 10. Consequently, after the device is shifted into the sleep mode, the "Low" level voltage is continuously applied to the sleep terminal 12 of the power supply control unit 10, thereby maintaining the sleep mode until the next operation of the push switch 30 is performed by the user so as to switch the operation mode to the normal operation mode.

In this way, in the power supply control mechanism of the first configuration, it is possible to switch the operation mode of the device between the sleep mode and the normal operation mode by the operation of the push switch performed by the user.

[Second configuration of power supply control mechanism]

Next, the second configuration of the power supply control mechanism according to the present disclosure is described.

In the power supply control mechanism of the second configuration, a detection signal output from the signal generation unit differs from the detection signal of the above described power supply control mechanism of the first configuration.

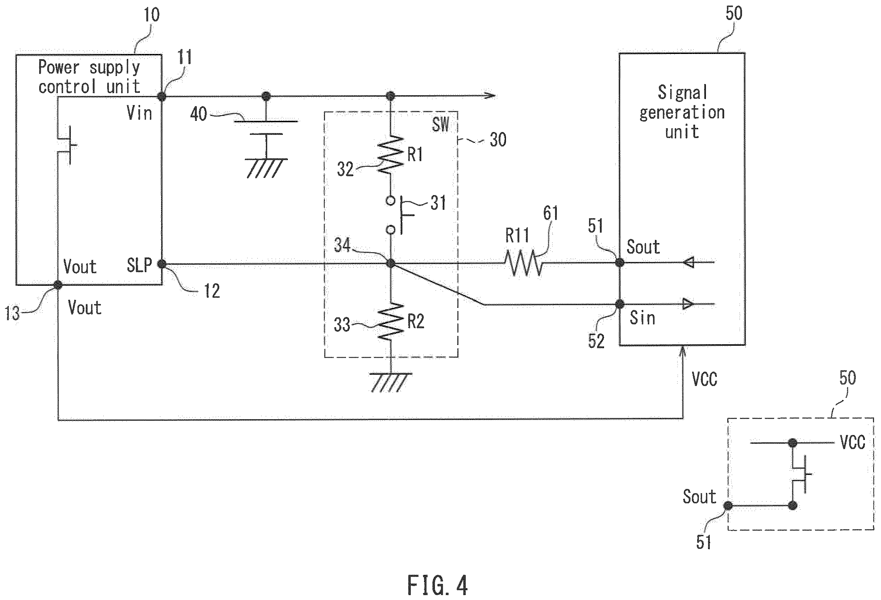

FIG. 4 is a block diagram illustrating the second configuration of the power supply control mechanism according to the present embodiment.

Similarly to FIG. 1, FIG. 4 illustrates respective components of the power supply control mechanism and the interrelation between the respective components from a functional aspect, and thus, each block shown in FIG. 4 does not represent physically independent member.

The power supply control mechanism of the second configuration shown in FIG. 4 includes a power supply control unit 10, a signal generation unit 50, and further a push switch 30. As described above, the power supply control mechanisms of the first configuration and the second configuration differ only in the detection signal output from the signal generation unit, and thus, the power supply control unit 10 and the push switch 30 in the power supply control mechanism of the second configuration are same as those in the power supply control mechanism of the first configuration. Therefore, in FIG. 4, the same members as those in FIG. 1 are denoted by the same reference numerals as in FIG. 1, and a detailed description is omitted.

Based on the voltage applied to the sleep terminal 12, the power supply control unit 10 controls the supply of a power as a driving voltage VCC from a battery 40 as a power source to a driving circuit, thereby switching an operation mode of a device between a normal operation mode and a sleep mode. The power supply control unit 10 controls the supply of the driving voltage VCC to the driving circuit, and other than that, the power supply control unit 10 performs a general control relating to the power source of the electronic device including the power supply control mechanism, such as charge control in a case where the battery 40 is a rechargeable battery. The power supply control unit 10 can be implemented by using an electric circuit unit or a microcomputer incorporating a logic circuit.

Also in the power supply control mechanism of the second configuration, the signal generation unit 50 operates with the driving voltage VCC supplied from the battery 40 under the power supply control of the power supply control unit 10. The driving voltage VCC of the signal generation unit 50 may be, e.g., 1.4 V, and may be the same as or different from the driving voltage of other electronic circuit mounted in a device including a driving circuit, which is not shown in FIG. 4.

The signal generation unit 50 generates the detection signal to be applied to the sleep terminal 12 of the power supply control unit 10 and outputs the signal from a signal output terminal (Sout) 51. The signal generation unit 50 of the power supply control mechanism of the second configuration generates and outputs a direct current signal (DC signal) as a detection signal that maintains a predetermined voltage.

Further, the signal generation unit 50 includes an input terminal (Sin) 52 for grasping the voltage of the sleep terminal 12 of the power supply control unit 10. On the basis of the input signal from the input terminal 52, the signal generation unit 50 stops the output of the detection signal from the output terminal 51 when the voltage applied to the sleep terminal 12 of the power supply control unit 10 satisfies a predetermined condition.

As exemplified in FIG. 4, a signal output circuit that outputs the detection signal from the signal output terminal 51 in the signal generation unit 50 can be configured as an open drain circuit similarly to the signal generation unit 20 of the power supply control mechanism of the first configuration shown in FIG. 1. The signal output circuit of the signal generation unit 50 of the second configuration can be configured as a CMOS circuit.

The signal generation unit 50 can be implemented by using an electric circuit unit or a microcomputer incorporating a logic circuit similarly to the signal generation unit 20 of the power supply control mechanism of the first configuration. It is also possible to configure the signal generation unit 50 as a part of a control unit that controls the operation of the whole device in the driving circuit of the device.

The push switch 30 includes a switch button 31 operated by the user, and a first voltage dividing resistance 32 and a second voltage dividing resistance 33 that are arranged so as to apply a predetermined voltage to a terminal 34 when the switch button 31 is operated. In the power supply control mechanism of the second configuration, the terminal voltage of the terminal 34 upon the operation of the push switch 30 performed by the user in the sleep mode is a predetermined first voltage recognized as a "High" level voltage in the sleep terminal 12 of the power supply control unit 10, and may be, e.g., 1.4 V.

Both a reusable rechargeable battery (secondary battery) and a dry battery (primary battery) may be used for the battery 40 as a power source.

In the power supply control mechanism of the second configuration, the detection signal generated in the signal generation unit 50 is a direct current signal having a constant voltage, and a detection resistance (R11) having a predetermined resistance is arranged between the terminal 34 of the push switch 30 and the signal output terminal 51 of the signal generation unit 50 so as to detect a change in the voltage in the sleep terminal 12 of the power supply control unit 10 upon the operation of the push switch 30.

Next, the switching control of the operation mode of the device in the power supply control mechanism of the second configuration shown in FIG. 4 is described.

As described above, the power supply control mechanisms of the second configuration and the first configuration are same in the power supply control unit and the push switch, and only differ in the signal generation unit, in particular, in a detection signal waveform output from the signal generation unit, and a circuit part that applies the detection signal to the sleep terminal. Therefore, the control of the switching operation from the sleep mode, in which the signal generation unit is in an inactive state, to the normal operation mode by detecting the operation of the push switch performed by the user is common to the power supply control mechanisms of the second configuration and the first configuration.

In the power supply control mechanism of the second configuration, the detection signal output from the signal generation unit 50 is a direct current signal that maintains a predetermined voltage, and thus, in a state where the detection signal output from the signal generation unit 50 is applied to the sleep terminal 12 of the power supply control unit 10, the voltage of the sleep terminal 12 does not become the "Low" level (a second voltage for example 0 V) for a period exceeding a predetermined time, e.g., 1 second. Therefore, also in the case of the power supply control mechanism of the second configuration, once the operation mode is shifted to the normal operation mode, the normal operation mode is maintained as long as the next operation of the push switch 30 is not performed by the user.

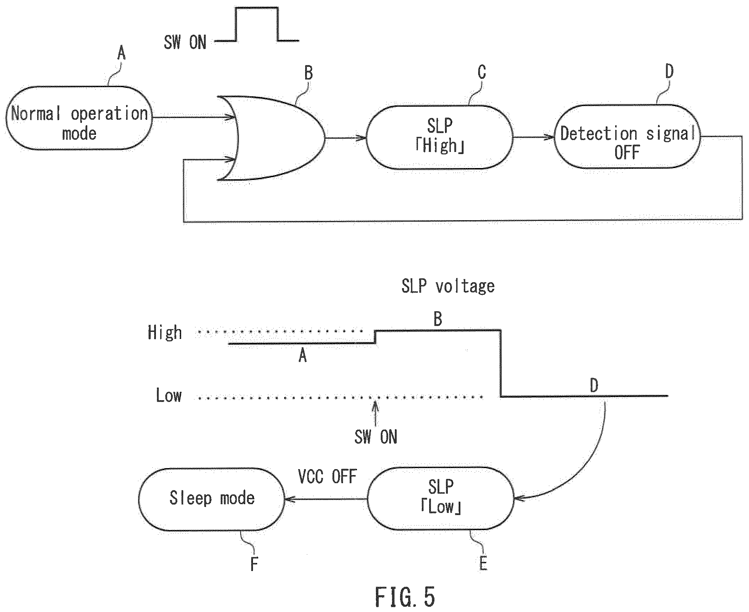

FIG. 5 is a transition diagram illustrating a condition change in the switching operation of a device from a normal operation mode to a sleep mode in the power supply control mechanism of the second configuration.

As shown in FIG. 5, in the normal operation mode (A), the user operates the push switch 30 so as to stop the operation of the device (B).

At this time, as a result of the operation of the push switch 30, a predetermined voltage attributed to a battery voltage is superposed, and the voltage of the sleep terminal 12 shifts from a switch off time voltage $V_{SLP(OFF)}$, which is a voltage of the detection signal continuously applied thereto, to a switch on time voltage $V_{SLP(ON)}$ (e.g., 1.4 V) of a "High" level voltage for a predetermined time (t1), e.g., 1 second.

When the voltage of the battery 40 is $V_B$, and the voltage of the detection signal from the signal generation unit 50 is $V_{SOUT}$, the switch off time voltage $V_{SLP(OFF)}$ is obtained from [Formula 1] below, and the switch on time voltage $V_{SLP(ON)}$ is obtained from [Formula 2] below.

[Formula 1]

$$V_{SLP(OFF)} = \frac{Vsout/R11}{\left(\frac{1}{R2} + \frac{1}{R11}\right)}$$

[Formula 2]

$$V_{SLP(ON)} = \frac{V_B/R1 + V_{SOUT}/R11}{\left(\frac{1}{R1} + \frac{1}{R2} + \frac{1}{R11}\right)}$$

For example, when $V_B$ = 3,7 V, $V_{SOUT}$ = 1.4 V, R1 = 16 kΩ, R2=10 kΩ, and R11=3kΩ, the switch off time voltage $V_{SLP(OFF)}$ is 1.1 V, and the switch on time voltage $V_{SLP(ON)}$ is 1.4 V.

The signal generation unit 50 monitors the voltage of the sleep terminal 12. When detecting that the "High" level voltage is applied to the sleep terminal 12 for a period exceeding a predetermined time of 1 second that is clearly distinguishable from a noise (C), the signal generation unit 50 determines that the push switch 30 is operated by the user, thereby stopping the generation and output of the detection signal (D).

Since the process shifts in this manner, the voltage applied to the sleep terminal 12 shifts from a state A in which the detection signal is applied, to a state B of the "High" level for a predetermined time, and then to a state D of the "Low" level, as shown in FIG. 5.

When the power supply control unit 10 detects that the voltage of the sleep terminal 12 is in the state D of the "Low" level for 1 second or more (E), it stops the supply of the driving voltage VCC to the driving circuit, thereby switching the operation mode of the device from the normal operation mode to the sleep mode (F).

The signal generation unit 50 is inactive in the sleep mode state where no driving voltage VCC is supplied from the power supply control unit 10. Consequently, after the device is shifted to the sleep mode, the "Low" level voltage is continuously applied to the sleep terminal 12 of the power supply control unit 10, thereby maintaining the sleep mode until the next operation of the push switch 30 is performed by the user so as to switch the operation mode to the normal operation mode.

In this way, in both of the power supply control mechanisms of the first configuration and the second configuration, it is possible to switch the operation mode of the device between the sleep mode and the normal operation mode by the operation of the push switch performed by the user.

For the power supply control mechanism of the first configuration, there is no need to provide the detection resistance (R11), which is required for the power supply control mechanism of the second configuration, because the detection signal generated in the signal generation unit is a pulse wave signal, and thus, the circuit structure can be more simplified as compared with the power supply control mechanism of the second configuration.

On the other hand, for the power supply control mechanism of the second configuration, in judging the application of the second voltage to the sleep terminal of the power supply control unit, there is no need to distinguish a case in which the second voltage is applied for a fixed time or more, and thus the circuit configuration of the power supply control unit would possibly be simplified.

[Power supply control method]

Next, the power supply control method disclosed in the present application is described by summarizing the operations of the power supply control mechanisms disclosed in the present application by way of concrete examples described as the power supply control unit of the first configuration and the power supply control unit of the second configuration.

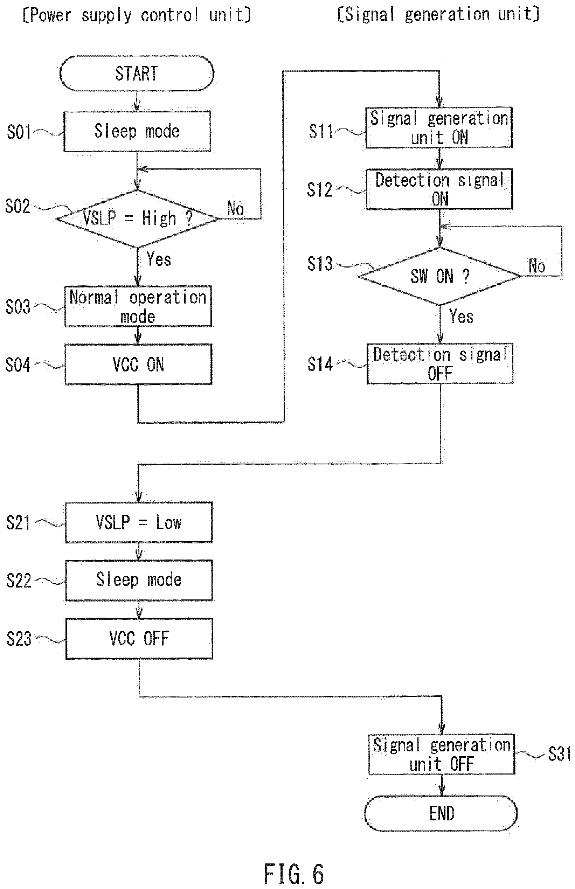

FIG. 6 is a flowchart illustrating an operation process of the power supply control method disclosed in the present application.

In FIG. 6, the operation process in the power supply control unit is shown on the left side of the figure, and the operation process in the signal generation unit is shown on the right side of the figure. In the following description, the constituting members are denoted by the same reference numerals as in the above-described power supply control mechanisms of the first configuration and second configuration.

In the power supply control method disclosed in the present application, the control operation process starts with a sleep mode state (step S01).

Under the sleep mode status, the power supply control unit 10 judges whether or not the user operates of the push switch 30 on the basis of whether or not the voltage (VSLP) applied to the sleep terminal 12 is at the "High" level for a fixed time or more that is distinguishable from a noise (step S02).

When the voltage of the sleep terminal 12 is not in the "High" level (No in the step S02), the power supply control unit 10 maintains the sleep mode until a change in the voltage of the sleep terminal 12 takes place.

When the voltage of the sleep terminal 12 reaches the "High" level (Yes in the step S02), the power supply control unit 10 determines that the push switch 30 is operated by the user, thereby switching the operation mode of the device to the normal operation mode (step S03).

In accordance with the switching from the sleep mode to the normal operation mode, the power supply control unit 10 supplies a driving voltage VCC, which is a power supplied from the battery 40 as a power source, to the driving circuit (step S04).

As a result of the supply of the driving voltage VCC, the signal generation unit 20 or 50 starts the operation (step S11).

The signal generation unit 20 or 50 outputs a detection signal from the signal output terminal 21 or 51 (step S12).

The signal generation unit 20 or 50, at the same time, monitors the voltage applied to the sleep terminal 12 and distinguishes whether or not the push switch 30 is operated by the user (step S13).

When the push switch 30 is not operated (No in the step S13), the signal detection unit 20 or 50 monitors a change in the voltage of the sleep terminal 12, while maintaining the output of the detection signal.

When the signal generation unit 20 or 50 detects a continuous "High" level voltage for a fixed time or more that is distinguishable from a noise (Yes in the step S13), it regards the change in the voltage as an indication of the operation of the push switch 30 performed by the user, thereby stopping the output of the detection signal (step S14).

At this time, the voltage VSLP applied to the sleep terminal 12 is in the continuous "Low" level for a fixed time or more (step S21).

From the start of the normal operation mode (step S03), the power supply control unit 10 keeps monitoring the voltage of the sleep terminal 12 to determine whether or not it reaches the "Low" level for a fixed time or more (1 second in the above example). When the voltage of the sleep terminal 12 reaches the "Low" level for a fixed time or more,the power supply control unit 10 determines that the push switch 30 is operated by the user so as to stop the operation of the device, thereby shifting to the sleep mode (step S22).

Shifting to the sleep mode causes the power supply control unit 10 to stop the supply of the driving voltage VCC (step S23).

As a result of the stopping of the supply of the driving voltage VCC, the operation of the signal generation unit 20 or 50 itself stops (step S31). Consequently, the detection signal is not to be applied to the sleep terminal 12 of the power supply control unit 10 until the push switch 30 is operated by the user to return the operation mode to the normal operation mode again, thereby allowing the device to maintain the sleep mode status.

According to the power supply control mechanism and power supply control method disclosed in the present application described above, it is possible to achieve both a simple configuration preferable for reduction in size and weight, and the operation control of the device at user's optional timing. Therefore, in particular they are suitable as the power supply control mechanism and power supply control method of various portable electronic devices such as a hearing aid.

The above description exemplified the first voltage for switching the operation mode from the sleep mode to the normal operation mode as the "High" level voltage, and the second voltage for switching the operation mode from the normal operation mode to the sleep mode as the "Low" level voltage. However, this is not a necessarily condition in the power supply control mechanism and power supply control method according to the present embodiment, and it is possible to set the first voltage to be lower than the second voltage. For example, it is obvious that the switching between the "High" level and the "Low" level can easily be achieved by using a circuit structure that allows the potential of the detection terminal to drop to a ground potential according to the push switch operation performed by the user. The "Low" level is not necessarily to be 0 V, and it is possible to set the potentials of the "High" level and the "Low" level appropriately using two potentials from which potential difference can be detected.

[Electronic device and hearing aid]

Next, the electronic device including the above-described power supply control mechanism disclosed in the present application is described by illustrating a hearing aid as an example of the electronic device.

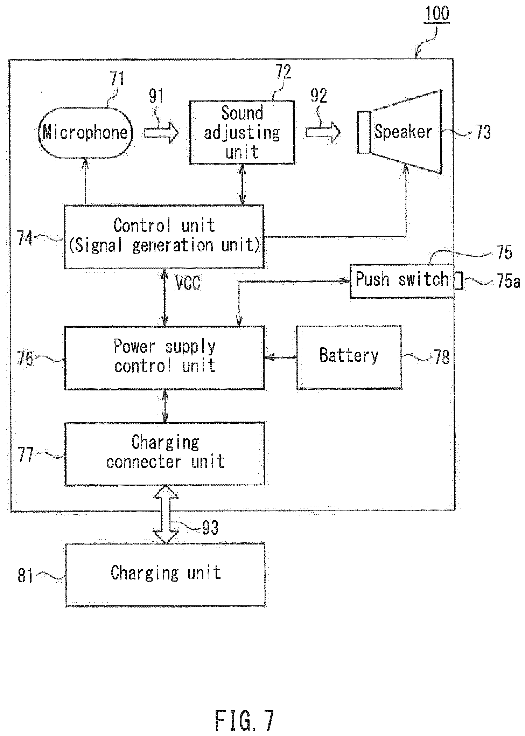

FIG. 7 is a block diagram illustrating a configuration of a hearing aid as an electronic device disclosed in the present application.

Similarly to FIGs. 1 and 4, FIG. 7 illustrates respective components of the power supply control mechanism and the interrelation between the respective components from a functional aspect, and thus, each block shown in FIG. 7 does not represent physically independent member.

As shown in FIG. 7, a hearing aid 100 of the present embodiment includes a microphone 71, a sound adjusting unit 72, a speaker 73, a control unit 74, a push switch 75, a power supply control unit 76, a charging connector unit 77, and a battery 78.

The microphone 71 detects an external sound around the hearing aid 100, and sends it as a sound signal 91 to the sound adjusting unit 72.

The sound adjusting unit 72 performs data processing of the sound signal 91 in accordance with a control signal from the control unit 74, and performs functions of, e.g., increasing the output level of a frequency band including a human voice while decreasing a peripheral noise level, and adjusting the sound signal audible to the user depending on the user's preference or the degree of hearing impairment. A conversion signal 92 adjusted by the sound adjusting unit 72 is sent to the speaker 73.

The speaker 73 is configured as a member separated from the hearing aid body including the microphone 71 and other circuit components, in a state of being connected to the hearing aid body via, e.g., a lead wire or a connecting resin member having a cable inside. The speaker 73 has an earphone shape insertable into an ear by the user.

The control unit 74 controls the whole operation of the hearing aid 100, including the above-described conversion and adjustment operations from the sound signal 91 to the conversion signal 92. The control unit can be implemented by using an electric circuit unit or a microcomputer incorporating a logic circuit. In the hearing aid 100 according to the present embodiment, the signal generation unit composing the power supply control mechanism is configured as a part of the control unit. In the hearing aid of the present embodiment, the control unit is formed of one IC chip for the sake of reduction in size and weight, and thus the signal generation unit is incorporated in the IC chip.

In the hearing aid of the present embodiment, in order for the user to press a push button 75a, the push switch 75 is formed so as to slightly protrude from the side surface of the hearing aid body. As described above, a so-called touch sensor may be used as a push switch. In this case, it is important to arrange the touch switch so that the switch does not touch the user's body when the hearing aid body is attached to the user's ear.

The power supply control unit 76, which is the power supply control unit in the above power supply control mechanism, detects the operation of the push switch 75 by the user, switches the operation mode of the hearing aid 100 from the sleep mode to the normal operation mode, and in cooperation with the signal generation unit mounted in the control unit 74, switches the operation mode of the hearing aid 100 from the normal operation mode to the sleep mode.

In the hearing aid 100 of the present embodiment, a button-type secondary battery is employed as the battery 78 for the sake of reduction in size and weight of the hearing aid body.

The charging connecter unit 77 is provided to charge the button-type secondary battery 78, and when connected to a charging unit 81 as an external device, a charging power 93 having a predetermined voltage and current is supplied to the battery 78. The power supply control unit 76 monitors the charging power 93 supplied from the charging unit 81 via the charging connector 77 unit, and performs charging control to avoid the overcharge of the battery 78.

By doing so, it is possible to achieve a hearing aid as the electronic device having the characteristics of the power supply control mechanism disclosed in the present application that can achieve both a simple configuration preferable for reduction in size and weight of the device, and the operation control of the device by the user at optional timing.

The specific configuration of the hearing aid described in the above description is a mere example, and the hearing aid only needs to include the power supply control mechanism according to the present application for controlling the operation mode of the hearing aid. It is obvious that various components for achieving necessary functions as a hearing aid can be introduced in the other component parts of the hearing aid body. In the hearing aid disclosed in the present application, a dry battery can also be used as a battery.

The power supply control mechanism disclosed in the present application can be mounted in various portable battery-driven electronic devices such as a mobile telephone, a game machine, a portable music player, a navigational device, and an electronic book reader. Such various electronic devices including the power supply control mechanism disclosed in the present application provide the same effect of reducing size and weight of the device.

As described above, the power supply control mechanisms and power supply control method disclosed in the present application, and further the electronic device and the hearing aid including the power supply control mechanism disclosed in the present application can achieve both a simple configuration preferable for reduction in size and weight of the device, and the operation control of the device at user's optional timing.

In the above description, only the device having two different operation modes of the sleep mode and the normal operation mode is exemplified. However, the power supply control mechanism and power supply control method disclosed in the present application can be used in electronic devices having operation modes other than the normal operation mode, e.g., a power operation mode that enables the operation of the device with a higher performance, and an eco-operation mode that aims to keep a longer battery life.

As an exemplary method for switching the operation mode between the sleep mode and the normal operation mode, the method for switching using the push switch operated by the user is illustrated in the above description. However, the method is not limited to this, and for example, it is possible to implement an electronic device having an automatic switching function between the sleep mode and the normal operation mode, such as a device capable of automatically shifting to the sleep mode by detecting that the device and a charging device are connected.

[Industrial Applicability]

The power supply control mechanism, the power supply control method, the electronic device and the hearing aid including the power supply control mechanism according to the present disclosure can achieve both a simple configuration possible for reduction in size and weight of the device, and switching of the operation mode of the device at user's desired optional timing, and are extremely useful. The embodiments disclosed in this application are to be considered in all respects as illustrative and not limiting. The scope of the invention is indicated by the appended claims.

**Claims**

1. A power supply control mechanism comprising:

   a power supply control unit (10) that includes a detection terminal (12) and controls a power supply from a power source (40) to a driving circuit so as to switch an operation mode of a device between a sleep mode and a normal operation mode;
   a push switch (30) that generates an electronic signal to be applied to the detection terminal only for a fixed time according to operation by a user; and
   a signal generation unit (20) that operates with a power supplied from the power source under the power supply control of the power supply control unit, and generates a detection signal to be applied to the detection terminal and grasps a voltage applied to the detection terminal,
   wherein, in the sleep mode, the power supply control unit, upon detecting the operation of the push switch on the basis of the voltage of the detection terminal, switches the operation of the device from the sleep mode to the normal operation mode so as to start the power supply from the power source to the driving circuit and to the signal generation unit for operation,
   in the normal operation mode, the signal generation unit, upon detecting the operation of the push switch on the basis of the voltage of the detection terminal, stops the output of the detection signal, and
   the power supply control unit, upon detecting the stoppage of the detection signal on the basis of the voltage applied to the detection terminal, switches the operation mode of the device from the normal operation mode to the sleep mode so as to stop the power supply from the power source to the driving circuit and to the signal generation unit.

2. The power supply control mechanism according to claim 1, wherein the detection signal is a pulse wave signal that alternately repeats an ON state for a predetermined time and an OFF state for a predetermined time, and a duration time of the OFF state of the pulse wave signal is shorter than a predetermined time set for the power supply control unit (10) to detect stoppage of the detection signal,

the signal generation unit (20) detects the operation of the push switch (30) on the basis of application of a voltage close to that of the ON state to the detection terminal (12) for a period longer than a duration time of the ON state of the pulse wave signal.

3. The power supply control mechanism according to claim 1, wherein the detection signal is a direct current signal that maintains a predetermined voltage continuously, and a voltage higher than the voltage of the direct current signal is applied to the detection terminal upon the operation of the push switch (30), the signal generation unit (20) detects the operation of the push switch on the basis of application of the voltage higher than the voltage of the direct current signal to the detection terminal (12).

4. A power supply control method comprising:

a power supply control unit that controls a power supply from a power source (40) to a driving circuit according to a voltage applied to a detection terminal (12) so as to switch an operation mode of a device between a sleep mode and a normal operation mode;

a push switch (30) that generates an electronic signal to be applied to the detection terminal only for a fixed time according to operation by a user; and

a signal generation unit (20) that operates with a power supplied from the power source under the power supply control of the power supply control unit, and generates a detection signal to be applied to the detection terminal and grasps the voltage applied to the detection terminal,

wherein, in the normal operation mode, the signal generation unit, upon detecting the operation of the push switch on the basis of the voltage of the detection terminal, stops the output of the detection signal, and

the power supply control unit switches an operation mode of a device from the sleep mode to the normal operation mode so as to start the power supply from the power source to the driving circuit and to the signal generation unit for operation upon detecting a change in the voltage applied to the detection terminal resulting from the operation of the push switch, and switches the operation mode of the device from the normal operation mode to the sleep mode so as to stop the power supply from the power source to the driving circuit and to the signal generation unit upon detecting that the detection signal is not applied to the detection terminal.

5. An electronic device comprising:

a battery (40) as a power source;

a driving circuit that operates with a power supplied from the battery; and

the power supply control mechanism according to any one of claims 1 to 3.

6. A hearing aid comprising:

a battery (78) as a power source;

a driving circuit that operates with a power supplied from the battery; and

the power supply control mechanism according to any one of claims 1 to 3, wherein as the driving circuit, the hearing aid includes at least a microphone (71) that detects an external sound, a control unit (74) that converts a sound signal from the microphone into a conversion signal having a predetermined condition, and a speaker (73) that is wearable on a user's ear and outputs the conversion signal converted in the control unit.

**Patentansprüche**

1. Leistungsversorgungssteuerungsmechanismus, umfassend:

eine Leistungsversorgungssteuerungseinheit (10), welche einen Erfassungsanschluss (12) umfasst und eine Leistungsversorgung von einer Leistungsquelle an eine Treiberschaltung steuert, um einen Betriebsmodus einer Vorrichtung zwischen einem Schlafmodus und einem Normalbetriebsmodus umzuschalten;

einen Tastschalter (30), der ein elektronisches Signal erzeugt, welches an den Erfassungsanschluss nur während einer festgelegten Zeit in Übereinstimmung mit einer Betätigung durch einen Benutzer anzulegen ist; und

eine Signalerzeugungseinheit (20), die mit einer von der Leistungsquelle unter der Leistungsversorgungsteuerung der Leistungsversorgungsteuerungseinheit zugeführten Leistung arbeitet und ein an den Detektionsanschluss anzulegendes Detektionssignal erzeugt und eine an den Detektionsanschluss angelegte Spannung erfasst,

wobei die Leistungsversorgungssteuerungseinheit in dem Schlafmodus beim Erfassen der Betätigung des Tastschalters auf Basis der Spannung des Detektionsanschlusses den Betrieb der Vorrichtung von dem Schlafmodus in den Normalbetriebsmodus umschaltet, um die Leistungsversorgung von der Leistungsquelle an die Treiberschaltung und die Signalerzeugungsschaltung für den Betrieb zu starten,

wobei die Signalerzeugungseinheit in dem Normalbetriebsmodus beim Erfassen der Betätigung des Tastschalters auf Basis der Spannung des Detektionsanschlusses die Ausgabe des Detektionssignals stoppt und

wobei die Leistungsversorgungssteuerungseinheit beim Erfassen des Stoppens des Detektionssignals auf Basis der an den Detektionsanschluss angelegten Spannung den Betriebsmodus der Vorrichtung von dem Normalbetriebsmodus in den Schlafmodus umschaltet, um die Leistungsversorgung von der Leistungsquelle an die Treiberschaltung und die Signalerzeugungseinheit zu stoppen.

2. Leistungsversorgungssteuerungsmechanismus gemäß Anspruch 1, wobei das Detektionssignal ein Pulswellensignal ist, das einen An-Zustand während einer vorbestimmten Zeit und einen Aus-Zustand während einer vorbestimmten Zeit abwechselnd wiederholt, und wobei eine Zeitdauer des Aus-Zustands des Pulswellensignals kürzer ist als eine vorbestimmte Zeit, welche für die Leistungsversorgungssteuerungsschaltung (10) eingestellt ist, um das Stoppen des Detektionssignals zu erfassen,

wobei die Signalerzeugungseinheit (20) die Betätigung des Tastschalters (30) auf der Basis des Anlegens einer Spannung nahe der des An-Zustands an den Erfassungsanschluss (12) während einer Dauer erfasst, die länger ist als eine Dauer des An-Zustands des Pulswellensignals.

3. Leistungsversorgungssteuerungsmechanismus nach Anspruch 1, wobei das Detektionssignal ein Gleichstromsignal ist, das eine vorbestimmte Spannung kontinuierlich beibehält, und wobei eine Spannung, die größer ist als die Spannung des Gleichstromsignals bei der Betätigung des Tastschalters (30) an den Erfassungsanschluss angelegt wird,

wobei die Signalerzeugungseinheit (20) die Betätigung des Tastschalters auf Basis des Anlegens der Spannung, die größer ist als die Spannung des Gleichstromsignals, an den Erfassungsanschluss (12) erfasst.

4. Leistungsversorgungsteuerungsverfahren, umfassend:

eine Leistungsversorgungssteuerungseinheit (10), welche eine Leistungsversorgung von einer Leistungsquelle an eine Treiberschaltung gemäß einer an einen Erfassungsanschluss (12) angelegten Spannung steuert, um einen Betriebsmodus einer Vorrichtung zwischen einem Schlafmodus und einem Normalbetriebsmodus umzuschalten;

einen Tastschalter (30), der ein elektronisches Signal erzeugt, welches an den Erfassungsanschluss nur während einer festgelegten Zeit in Übereinstimmung mit einer Betätigung durch einen Benutzer anzulegen ist; und

eine Signalerzeugungseinheit (20), die mit einer von der Leistungsquelle unter der Leistungsversorgungsteuerung der Leistungsversorgungsteuerungseinheit zugeführten Leistung arbeitet und ein an den Detektionsanschluss anzulegendes Detektionssignal erzeugt und eine an den Detektionsanschluss angelegte Spannung erfasst,

wobei die Signalerzeugungseinheit in dem Normalbetriebsmodus beim Erfassen der Betätigung des Tastschalters auf Basis der Spannung des Detektionsanschlusses die Ausgabe des Detektionssignals stoppt und

wobei die Leistungsversorgungssteuerungseinheit beim Erfassen einer Änderung in der an den Detektionsanschluss angelegten Spannung aufgrund der Betätigung des Tastschalters einen Betriebsmodus einer Vorrichtung von dem Schlafmodus in den Normalbetriebsmodus umschaltet, um die Leistungsversorgung von der Leistungsquelle zu der Treiberschaltung und der Signalerzeugungseinheit für den Betrieb zu starten, und den Betriebsmodus der Vorrichtung von dem Normalbetriebsmodus in den Schlafmodus umschaltet, um die Leistungsversorgung von der Leistungsquelle zu der Treiberschaltung und der Signalerzeugungseinheit zu stoppen, wenn erfasst wird, dass das Detektionssignal nicht an den Erfassungsanschluss angelegt wird.

5. Ein elektronisches Gerät, umfassend:

eine Batterie (40) als eine Leistungsquelle;
eine Treiberschaltung, welche mit einer von der Batterie zugeführten Leistung arbeitet; und
einen Leistungsversorgungssteuerungsmechanismus gemäß einem der Ansprüche 1 bis 3.

6. Hörhilfe, umfassend:

eine Batterie (40) als eine Leistungsquelle;

eine Treiberschaltung, welche mit einer von der Batterie zugeführten Leistung arbeitet; und

einen Leistungsversorgungssteuerungsmechanismus gemäß einem der Ansprüche 1 bis 3,

wobei die Hörhilfe als die Treiberschaltung wenigstens ein Mikrofon (71) umfasst, welches einen externen Ton erfasst, eine Steuereinheit (74), die ein Tonsignal des Mikrofons in ein Umwandlungssignal umwandelt, welches einen vorbestimmten Zustand aufweist, und einen Lautsprecher (73), der am Ohr eines Benutzers tragbar ist und das in der Steuerungseinheit umgewandelte Umwandlungssignal ausgibt.

## Revendications

1. Mécanisme de commande d'alimentation électrique comprenant :

   une unité de commande d'alimentation électrique (10) qui comprend une borne de détection (12) et qui commande l'alimentation électrique par une source d'alimentation (40) d'un circuit de pilotage de façon à commuter un mode de fonctionnement d'un dispositif entre un mode de veille et un mode de fonctionnement normal ;

   un commutateur poussoir (30) qui génère un signal électronique devant être appliqué à la borne de détection uniquement pendant un temps fixé en fonction du fonctionnement par un utilisateur ; et

   une unité de génération de signal (20) qui fonctionne avec une alimentation fournie par la source d'alimentation sous la commande d'alimentation électrique de l'unité de commande d'alimentation électrique, et génère un signal de détection devant être appliqué à la borne de détection et saisit une tension appliquée à la borne de détection,

   dans lequel, en mode veille, l'unité de commande d'alimentation électrique, à la détection du fonctionnement du commutateur poussoir sur la base de la tension de la borne de détection, commute le fonctionnement du dispositif du mode veille au mode de fonctionnement normal de façon à démarrer l'alimentation électrique par la source d'alimentation du circuit de pilotage et de l'unité de génération de signal pour un fonctionnement,

   dans le mode de fonctionnement normal, l'unité de génération de signal, à la détection du fonctionnement du bouton poussoir sur la base de la tension de la borne de détection, interrompt la sortie du signal de détection, et l'unité de commande d'alimentation électrique, à la détection de l'interruption du signal de détection sur la base de la tension appliquée à la borne de détection, commute le mode de fonctionnement du dispositif du mode de fonctionnement normal au mode de veille de façon à interrompre l'alimentation électrique par la source d'alimentation du circuit de pilotage et de l'unité de génération de signal.

2. Mécanisme de commande d'alimentation électrique selon la revendication 1, dans lequel le signal de détection est un signal d'onde pulsée qui répète en alternance un état MARCHE pendant un temps prédéterminé et un état ARRET pendant un temps prédéterminé, et la durée de l'état ARRET du signal d'onde pulsée est plus courte qu'une durée prédéterminée établie pour l'unité de commande d'alimentation électrique (10) pour détecter l'interruption du signal de détection, l'unité de génération de signal (20) détecte le fonctionnement du commutateur poussoir (30) sur la base de l'application d'une tension proche de celle de l'état MARCHE à la borne de détection (12) pendant une période plus longue que la durée de l'état MARCHE du signal d'onde puisée.

3. Mécanisme de commande d'alimentation électrique selon la revendication 1, dans lequel le signal de détection est un signal en courant continu qui maintient en continu une tension prédéterminée, et une tension supérieure à la tension du signal en courant continu est appliquée à la borne de détection suite au fonctionnement du commutateur poussoir (30), l'unité de génération de signal (20) détecte le fonctionnement du commutateur poussoir sur la base de l'application à la borne de détection (12) de la tension supérieure à la tension du signal en courant continu.

4. Procédé de commande d'alimentation électrique comprenant :

   une unité de commande d'alimentation électrique qui commande une alimentation électrique par une source d'alimentation (40) d'un circuit de pilotage en fonction d'une tension appliquée à une borne de détection (12) de façon à commuter un mode de fonctionnement d'un dispositif entre un mode de veille et un mode de fonctionnement normal ;

   un commutateur poussoir (30) qui génère un signal électronique devant être appliqué à la borne de détection uniquement pendant un temps fixé en fonction du fonctionnement par un utilisateur ; et

   une unité de génération de signal (20) qui fonctionne avec une alimentation fournie par la source d'alimentation sous la commande d'alimentation électrique de l'unité de commande d'alimentation électrique, et génère un signal de détection devant être appliqué à la borne de détection et saisit une tension appliquée à la borne de

EP 3 112 981 B1

détection,
dans lequel, dans le mode de fonctionnement normal, l'unité de génération de signal, à la détection du fonctionnement du bouton poussoir sur la base de la tension de la borne de détection, interrompt la sortie du signal de détection, et l'unité de commande d'alimentation électrique commute un mode de fonctionnement d'un dispositif du mode de veille au mode de fonctionnement normal de façon à démarrer l'alimentation électrique par la source d'alimentation du circuit de pilotage et de l'unité de génération de signal pour un fonctionnement à la détection d'un changement de la tension appliquée à la borne de détection résultant du fonctionnement du commutateur poussoir, et commute le mode de fonctionnement du dispositif du mode de fonctionnement normal au mode de veille de façon à interrompre l'alimentation électrique par la source d'alimentation du circuit de pilotage et de l'unité de génération de signal à la détection que le signal de détection n'est pas appliqué à la borne de détection.

5. Dispositif électronique comprenant :

   une batterie (40) en tant que source d'alimentation ;
   un circuit de pilotage qui fonctionne avec une alimentation fournie par la batterie ; et
   le mécanisme de commande d'alimentation électrique selon l'une quelconque des revendications 1 à 3.

6. Prothèse auditive comprenant :

   une batterie (78) en tant que source d'alimentation ;
   un circuit de pilotage qui fonctionne avec une alimentation fournie par la batterie ; et
   le mécanisme de commande d'alimentation électrique selon l'une quelconque des revendications 1 à 3,
   dans laquelle, en tant que circuit de pilotage, la prothèse auditive comprend au moins un microphone (71) qui détecte un son externe, une unité de commande (74) qui convertit un signal sonore provenant du microphone en un signal de conversion ayant une condition prédéterminée, et un haut-parleur (73) qui peut être porté sur une oreille de l'utilisateur et délivre en sortie le signal de conversion converti dans l'unité de commande.

FIG. 1

EP 3 112 981 B1

FIG. 2

FIG. 3

FIG. 4

SW ON

A

Normal operation
mode

B

SLP
「High」
C

Detection signal
OFF
D

SLP voltage

High

B

A

Low

SW ON

VCC OFF

Sleep mode

F

SLP
「Low」
E

D

FIG. 5

EP 3 112 981 B1

[Power supply control unit]  [Signal generation unit]

```
                          START

S01 ─── Sleep mode                    S11 ─── Signal generation
                                              unit ON

S02 ─── VSLP = High ?    No           S12 ─── Detection signal
                                              ON
              Yes
                                      S13 ─── SW ON ?    No
S03 ─── Normal operation
        mode                                    Yes

S04 ─── VCC ON                        S14 ─── Detection signal
                                              OFF


S21 ─── VSLP = Low

S22 ─── Sleep mode

S23 ─── VCC OFF


                          Signal generation ─── S31
                          unit OFF

                          END
```

FIG. 6

22

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013533659 A
- GB 2306237 A